(19) Europäisches Patentamt

European Patent Office

Office européen des brevets

(11) Veröffentlichungsnummer : **0 300 441 B1**

(12) # EUROPÄISCHE PATENTSCHRIFT

(45) Veröffentlichungstag der Patentschrift :
27.03.91 Patentblatt 91/13

(51) Int. Cl.⁵ : **E04D 13/00, A01M 29/00**

(21) Anmeldenummer : 88111651.1

(22) Anmeldetag : 20.07.88

(54) **Vogelabschreckvorrichtung für den Gebäudeschutz.**

(30) Priorität : 23.07.87 AT 1863/87

(43) Veröffentlichungstag der Anmeldung :
25.01.89 Patentblatt 89/04

(45) Bekanntmachung des Hinweises auf die
Patenterteilung :
27.03.91 Patentblatt 91/13

(84) Benannte Vertragsstaaten :
AT BE FR IT NL

(56) Entgegenhaltungen :
DE-A- 1 757 735
DE-A- 3 501 333

(56) Entgegenhaltungen :
US-A- 2 306 080
US-A- 2 475 047
US-A- 2 888 716
US-A- 2 938 243
US-A- 3 191 239

(73) Patentinhaber : Reichhof, Johann
St.-Veiter-Strasse 38
A-5621 St. Veit/Pongau (AT)

(72) Erfinder : Obersberger, Franz
Heiligengeistgasse 22
A-5270 Mauerkirchen (AT)

�', 74 Vertreter : Haft, Berngruber, Czybulka
Postfach 14 02 46 Hans-Sachs-Strasse 5
W-8000 München 5 (DE)

EP 0 300 441 B1

## Beschreibung

Die Erfindung bezieht sich auf eine Vogelabschreckvorrichtung nach dem Oberbegriff des Anspruchs 1.

Eine derartige Vorrichtung ist aus US-A-3,191,239 bekannt. Die Zinken sind dabei aus igelförmig angeordneten Stahldraht-Stacheln gebildet, die an einem Streifen befestigt sind. Entlang dem Streifen sind in Abständen C-förmige Blattfedern vorgesehen, die mit ihrem anderen Ende am Fußansatz befestigt sind. Durch diese Blattfedern wird dem Schutzrechen die erforderliche Nachgiebigkeit zur Verunsicherung der Vögel verliehen.

Ferner ist aus dem DE-GM 84 12 524 eine Vorrichtung bekannt, die zwei Ständer aufweist, die mit ihrem als Klipsprofil ausgebildeten Fußansatz im Abstand voneinander z. B. auf die Regenrinne gesteckt werden, wobei zwischen den oberen Enden der Ständer eine Schnur oder dgl. gespannt wird. Eine solche Schnur ist jedoch nicht sehr widerstandsfähig. auch führt ein leicht montierbares und damit lockeres Klipsprofil mit der Zeit zum Durchhängen der Schnur und damit zur Unwirksamkeit der Vorrichtung.

Der Erfindung liegt daher die Aufgabe zugrunde, eine Vogelabschreckvorrichtung zu schaffen, die sich bei rationeller Herstellung und Montage durch ihre Langlebigkeit, durch ihr unauffälliges Aussehen und nicht zuletzt durch ihre hohe Schutzwirkung auszeichnet.

Dies wird erfindungsgemäß mit der im Anspruch 1 gekennzeichneten Vogelabschreckvorrichtung erreicht. In den Unteransprüchen sind vorteilhafte Ausgestaltungen der Erfindung angegeben.

Die erfindungsgemäß eingesetzten, aus Kunststoff leicht und kostengünstig herstellbaren Schutzrechen gewähren den anfliegenden Vögeln beim Landen aufgrund der nachgiebigen Zinken keinen sicheren Halt, so daß die Vögel zurückschrecken und den Bereich um den Schutzrechen meiden. Die Schutzrechen werden zweckmäßigerweise im Rand- oder Kantenbereich von Dachrinnen, Schneefanggittern, Gesimsen, Mauervorsprüngen und dgl. befestigt, was durch den entsprechend vorbereiteten Fußansatz vergleichsweise schnell und sauber möglich ist, und verhindern dadurch auf überraschend wirkungsvolle Weise ein Niederlassen der Vögel auf den so geschützten Gebäudeteilen. Da die Zinken, um ihre Funktion erfüllen zu können, weder sehr lang noch, dick zu sein brauchen, es genügen beispielsweise Zinken von etwa 50 mm Länge und wenigen mm Breite, werden die an einem Gebäude montierten Schutzrechen von einem Betrachter kaum wahrgenommen und beeinträchtigen keinesfalls das Erscheinungsbild des zu schützenden Gebäudes.

Die Zinken sollen so biegeelastisch sein, daß sie durch das Gewicht eines landenden Vogels durchgebogen werden, was den Vogel erschreckt, verunsichert und zum Weiterfliegen veranlaßt. Diese biegeweichen Zinken müssen aber auch witterungsbeständig sein und Schneebelastungen überstehen können, so daß die Zinken vorteilhafterweise eine sich zur Spitze hin verjüngende Zungenform und vorzugsweise einen trapezförmigen Querschnitt aufweisen. Dadurch gibt es eine entsprechend feste Verankerung der einzelnen Zinken am Fußansatz bei gleichzeitig zur Spitze hin zunehmender Biegeweichheit, so daß die Zinken die an sie gestellten Anforderungen sowohl hinsichtlich ihrer Nachgiebigkeit als auch ihrer Belastungs fähigkeit erfüllen. Ein trapezförmiger Querschnitt bietet zusätzlich bei verhältnismäßig großer Querschnittsfläche nur eine schmale Oberseite zur Ablagerung von Auflasten, wie Schnee u. dgl.

Zur Befestigung des Schutzrechens kann der Fußansatz an sich auf Jede geeignete Weise, etwa als vorgelochter Befestigungsschenkel oder -lappen, hergestellt sein, doch besonders günstig ist es, wenn erfindungsgemäß der Fußansatz ein Klipsprofil bildet, wodurch sich der Schutzrechen einfach und mit wenigen Handgriffen auf Rändern von Regenrinnen, Schneegittern, Abdeckblechen oder anderen entsprechenden Gebäudeteilen aufsetzen läßt.

Gemäß einer besonders vorteilhaften Ausgestaltung der Erfindung ist vom Klipsprofil durch eine Sollbruchstelle ein die Zinkenreihe tragender Randschenkel abtrennbar, so daß der Schutzrechen nach einer solchen Abtrennung wie mit einem normalen Befestigungsschenkel an einem Gesims oder anderen flächigen Gebäudebereichen durch Nageln, Schrauben od. dgl. fixierbar ist. Der Schutzrechen kann je nach Bedarf aufgeklipst, angestiftet oder angeschraubt, in ein Mörtelbett eingesetzt od. dgl. werden, so daß diese Vogelabschreckvorrichtung sofort im Zuge eines Neubaues, eines Neuverputzes oder auch nachträglich bei Altbauten problemlos und sauber anzubringen ist.

Ist erfindungsgemäß der fußansatz zur Zinkenreihe quergerichtet, kommt es bei der Befestigung des Schutzrechens gleich zur gewünschten Orientierung der Zinken, die vorzugsweise aufwärts und vorwärts gegen die Vogelanflugrichtung vorragen sollen.

In der Zeichnung ist der Erfindungsgegenstand an Hand eines Ausführungsbeispieles rein schematisch veranschaulicht, und zwar zeigen

Fig. 1 und 2 eine erfindungsgemäße Vogelabschreckvorrichtung in Draufsicht und Stirnansicht sowie

Fig. 3 und 4 zwei Anwendungsmöglichkeiten dieser Vorrichtung im Schnitt kleineren Maßstabes.

Um auf einfache, aber wirkungsvolle Weise ein Landen und ein Niederlassen von Vögeln auf Gebäuden od. dgl. zu verhindern und dadurch einen Schutz vor Verschmutzungen und Beschädigungen zu erreichen, gibt es einen leistenförmigen Schutzrechen 1, der einen Fußansatz 2 zur Befestigung an entsprechenden Gebäudeteilen aufweist und eine Reihe biegeelastischer Zinken 3 bildet. Die Zinken 3 verjüngen sich leicht zur Spitze hin und besitzen einen etwa trapezförmigen Querschnitt, wobei sie bereits einer dem durchschnittlichen Vogelgewicht entsprechenden Belastung nachgeben und durch landende Vögel niedergebogen werden. Der Fußansatz 2 ist als Klipsprofil 4 ausgestaltet, wobei eine Sollbruchstelle 5 das Abtrennen eines die Zinkenreihe 3 tragenden Randschenkels 4a erlaubt.

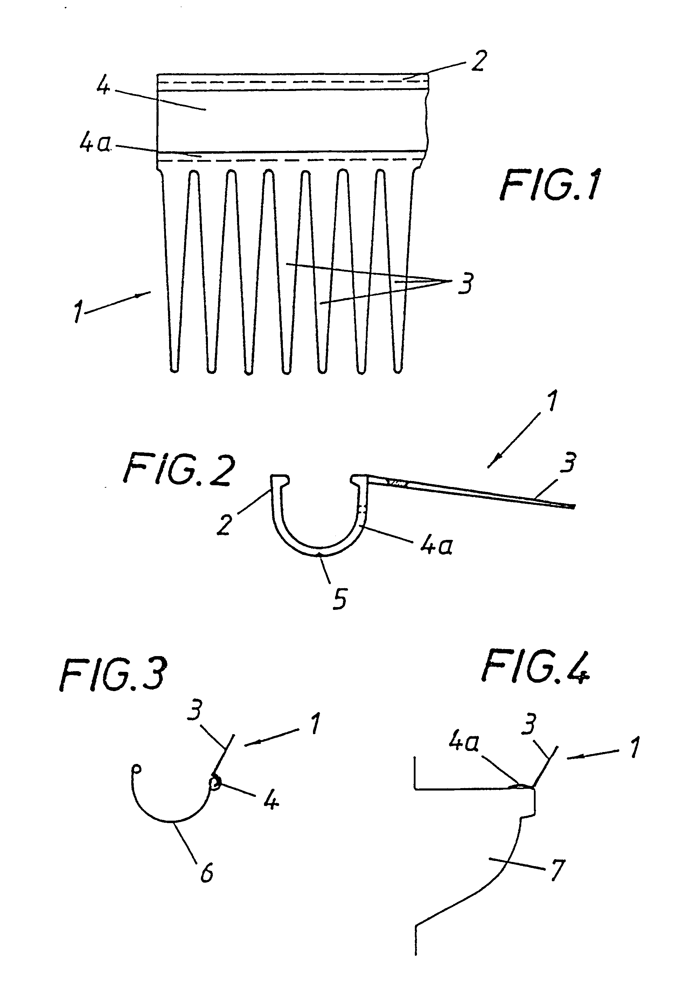

Der Fußansatz 2 ist zur Zinkenreihe 3 quergerichtet, so daß sich bei einfacher Montage die Zinken 3 in einer aufwärts geneigten Lage befinden, wie in Fig. 3 und 4 angedeutet. Der Schutzrechen 1 läßt sich dabei gemäß Fig. 3 mit dem Klipsprofil 4 auf den Rand einer Regenrinne 6 aufklemmen oder gemäß Fig. 4 entlang einem Mauergesims 7 od. dgl. unter Verwendung des abgetrennten Randschenkels 4a als Befestigungsschenkel andübeln od. dgl.

Anfliegende Vögel versuchen auf den im Randbereich der Landeplätze angeordneten Schutzrechen 1 aufzusetzen, wobei allerdings die Zinken 2, auf die sich die Vögel niederlassen, nachgeben und den Vögeln keinerlei festen Halt bieten. Die Vögel werden verunsichert und von einer Landung abgehalten, so daß sich auf rationelle Weise ein sehr wirkungsvoller Gebäudeschutz erreichen läßt.

Um die gewünschte Biegeweichheit zu erhalten, können sich die Zinken 3 entweder in ihrer Breite oder in ihrer Dicke oder sowohl in ihrer Breite als auch in ihrer Dicke zur Spitze hin verjüngen. Die Länge der Zinken 3 kann 25 bis 100 mm betragen, beispielsweise etwa 50 mm. Die Breite der Zinken 3 und ihr Abstand voneinander kann 2 bis 10 mm betragen, beispielsweise etwa 4 mm und ihre Dicke 0,1 bis 3 mm, beispielsweise etwa 1 mm. Bei sich zur Spitze hin verjüngenden Zinken 3 gelten diese Abmessungen der Breite, der Dicke und des Abstandes für die Mitte der Länge der Zinken 3.

Die Herstellung der erfindungsgemäßen Vorrichtung aus Kunststoff hat nicht nur fertigungstechnische Vorteile, vielmehr wird dadurch auch sichergestellt, daß durch Blitzschläge oder sonstige Stromführungen keine Schäden hervorgerufen werden und das Material nicht verrottet.

## Ansprüche

1. Vogelabschreckvorrichtung für den Gebäudeschutz, welche als leistenförmiger Schutzrechen ausgebildet ist, der beim Landen der Vögel nachgiebige Zinken und einen Fußansatz zur Befestigung entlang als Vogellandeplatz dienender Dach- und Fassadenteile, wie Regenrinnen, Gesimse oder dgl. aufweist, dadurch gekennzeichnet, daß der Schutzrechen aus Kunststoff besteht und eine Reihe von Zinken (3) aufweist, die einzeln am Fußansatz (2) bei zur Spitze hin zunehmender Biegeweichheit fest verankert sind.

2. Vogelabschreckvorrichtung nach Anspruch 1, dadurch gekennzeichnet daß die Zinken (3) eine sich zur Spitze hin verjüngende Zungenform und vorzugsweise einen trapezförmigen Querschnitt aufweisen

3. Vogelabschreckvorrichtung nach Anspruch 1 oder 2, dadurch gekennzeichnet, daß der Fußansatz (2) ein Klipsprofil (4) bildet.

4. Vogelabschreckvorrichtung nach Anspruch 3, dadurch gekennzeichnet, daß vom Klipsprofil (4) durch eine Sollbruchstelle (5) ein die Zinkenreihe (3) tragender Randschenkel (4a) abtrennbar ist.

5. Vogelabschreckvorrichtung nach einem der Ansprüche 1 bis 4, dadurch gekennzeichnet, daß der Fußansatz (2) zur Zinkenreihe (3) quergerichtet ist.

## Claims

1. A bird guard for protecting buildings designed as a bar-shaped protective rake having teeth that give way when birds land, and a base projection for attachment along roof and facade portions serving as landing places for birds, such as eaves troughs, cornices or the like, characterized in that the rake is made of plastics material and has a row of teeth (3) that are individually anchored firmly on the base projection (2) with bending softness that increases toward the tip.

2. The bird guard of claim 1, characterized in that the teeth (3) have a tongue shape tapering toward the tip and preferably a trapezoidal cross section.

3. The bird guard of claim 1 or 2, characterized in that the base projection (2) forms a clips profile (4).

4. The bird guard of claim 3, characterized in that an edge leg (4a) bearing the row of teeth (3) can be detached from the clips profile (4) at a predetermined breaking point (5).

5. The bird guard of any of claims 1 to 4, characterized in that the base projection (2) is transverse to the row of teeth (3).

## Revendications

1. Dispositif d'effarouchement des oiseaux pour la protection de bâtiments, constitué d'une baguette formant râteau de protection présentant, lorsque les oiseaux se posent, des dents flexibles et une embase de fixation le long des éléments de toits et de façades servant d'emplacement de pose des oiseaux, tels que gouttières, corniches, etc., caractérisé en ce que le râteau de protection est en matière plastique et présente une rangée de dents (3) qui sont chacune ancrées sur l'embase (2) et dont la flexibilité augmente vers la pointe.

2. Dispositif d'effarouchement des oiseaux selon la revendication 1, caractérisé en ce que les dents (3) présentent une forme de langue s'amincissant vers la pointe et de préférence une section trapézoïdale.

3. Dispositif d'effarouchement des oiseaux selon la revendication 1 ou 2, caractérisé en ce que l'embase (2) forme un profil de clip (4).

4. Dispositif d'effarouchement des oiseaux selon la revendication 3, caractérisé en ce qu'une branche à rebord (4a) portant la rangée de dent (3) est séparable du profil de clip (4) par un point destiné à la rupture (5).

5. Dispositif d'effarouchement des oiseaux selon la revendication 1 à 4, caractérisé en ce que l'embase (2) est orientée transversalement à la rangée de dents (3).

FIG.1

FIG.2

FIG.3

FIG.4